# EUROPEAN PATENT SPECIFICATION

(11) **EP 4 418 020 B1**
(45) Date of publication and mention of the grant of the patent: **21.01.2026**
(21) Application number: 21966423.2
(22) Date of filing: 03.12.2021
(51) Int. Cl.: G06N 3/0464, G06N 3/09, G01W 1/10, G01S 13/95, G01S 7/41, G01V 1/01

(54) **TSUNAMI LEARNING DEVICE, TSUNAMI LEARNING METHOD, TSUNAMI PREDICTION DEVICE, AND TSUNAMI PREDICTION METHOD**
TSUNAMI-LERNVORRICHTUNG, TSUNAMI-LERNVERFAHREN, TSUNAMI-VORHERSAGEVORRICHTUNG UND TSUNAMI-VORHERSAGEVERFAHREN
DISPOSITIF D'APPRENTISSAGE DE TSUNAMI, PROCÉDÉ D'APPRENTISSAGE DE TSUNAMI, DISPOSITIF DE PRÉDICTION DE TSUNAMI ET PROCÉDÉ DE PRÉDICTION DE TSUNAMI

(43) Date of publication of application: 21.08.2024
(73) Proprietor: MITSUBISHI ELECTRIC CORPORATION, Chiyoda-ku Tokyo 100-8310 (JP)
(72) Inventor: ENDO, Takao, Tokyo 100-8310 (JP); YOSHIMURA, Genta, Tokyo 100-8310 (JP)
(74) Representative: Pfenning, Meinig & Partner mbB
(86) International application number: PCT/JP2021/044431
(87) International publication number: WO 2023/100342

(56) References cited:
- JP-A- 2020 173 160
- KR-B1- 102 061 500
- M. CHELALI ET AL: "From pixels to random walk based segments for image time series deep classification", LECTURE NOTES IN COMPUTER SCIENCE, vol. 12068, 9 October 2020 (2020-10-09), pages 339 - 351, XP047565504, DOI: 10.1007/978-3-030-59830-3_30
- M. CHELALI ET AL: "Deep-STaR: classification of image time series based on spatio-temporal representations", COMPUTER VISION AND IMAGE UNDERSTANDING, vol. 208-209, 103221, 15 May 2021 (2021-05-15), XP093229583, DOI: 10.1016/j.cviu.2021.103221
- A. A. MAHAMANE ET AL: "Timed-image based deep learning for action recognition in video sequences", PATTERN RECOGNITION, vol. 104, 107353, 3 April 2020 (2020-04-03), XP093229584, DOI: 10.1016/j.patcog.2020.107353
- MAKINOSHIMA FUMIYASU, OISHI YUSUKE, YAMAZAKI TAKASHI, FURUMURA TAKASHI, IMAMURA FUMIHIKO: "Early forecasting of tsunami inundation from tsunami and geodetic observation data with convolutional neural networks", NATURE COMMUNICATIONS, vol. 12, no. 1, XP093070148, DOI: 10.1038/s41467-021-22348-0
- HITOKOTO, MASAYUKI; FURUKI, HIROZAKU; ARAKI, TAKERU; SAKURABA, MASAAKI: "Efforts to utilize AI technology in flood and landslide disasters", NIPPON KOEI TECHNICAL FORUM, no. 28, 1 January 2020 (2020-01-01), pages 39 - 48, XP009546777, ISSN: 1340-394X

## Description

### TECHNICAL FIELD

The technique of the present disclosure relates to a tsunami learning device, a tsunami learning method, a tsunami prediction device, and a tsunami prediction method.

### BACKGROUND ART

A technique of predicting a tsunami height and a tsunami arrival time using observation data of a marine radar is known.

For example, a tsunami height and tsunami arrival time prediction system according to Patent Literature 1 implements prediction by adopting convolutional neural networks (CNN) for a learning model.
Chelali et al; From pixels to random walk based segments for image time series deep classification; LNCS, vol. 12068, pp. 339-351; pub. in 2020; discloses a method for classifying image time series using random walk-based segmentation. It transforms 2D+t data into a 2D representation, preserving temporal information while reducing spatial dimensions.
Makinoshima et al; Early forecasting of tsunami inundation from tsunami and geodetic observation data with convolutional neural networks; Nature Communications, vol. 12(1), art. 2253; pub. 15 April 2021. discloses a tsunami forecasting method using convolutional neural networks (CNNs) for early warning systems.

### CITATION LIST

### PATENT LITERATURE

Patent Literature 1: JP 2020-173160 A

### SUMMARY OF INVENTION

### TECHNICAL PROBLEM

CNN is often used in a field of image recognition. When CNN is used for image recognition, generally, RGB data is set in a channel direction, and n × n (n is a natural number of 2 or more) is set as the size of a convolution filter. Meanwhile, when CNN is used for tsunami prediction, there is a degree of freedom in design, such as which physical quantity is set in a channel direction or what size a convolution filter is set to. For example, CNN used for the system described in Patent Literature 1 sets time-series data in a channel direction. It is conceivable to set the size of a convolution filter in this system to n × n similarly to a case of using CNN for image recognition. Hereinafter, a tsunami height and tsunami arrival time prediction system in which time-series data is set in a channel direction and the size of a convolution filter is set to n × n is referred to as "conventional technique".

However, as described above, in consideration of the degree of freedom in design in a case where CNN is used for tsunami prediction, there is a possibility that there is CNN setting with higher accuracy in tsunami prediction than in the conventional technique.

Therefore, an object of the technique of the present disclosure is to provide a tsunami prediction device having higher prediction accuracy than that of the conventional technique.

### SOLUTION TO PROBLEM

The invention is defined by the appended set of claims. A tsunami learning device according to the technique of the present disclosure includes: an input unit to acquire a training data set including observation data of a marine radar; and a CNN unit including CNN, to perform CNN processing on the training data set by using the training data set as teacher data to learn the CNN. The observation data is input to the CNN in such a manner that a channel direction of an input layer is an orientation direction of the observation data, the orientation direction being a rotational direction around the marine radar. The CNN includes a distance dimension feature extracting unit, a temporal dimension feature extracting unit, and a time-series prediction unit. The distance dimension feature extracting unit has one or more distance dimension convolution layers, and each of the distance dimension convolution layers has a filter having a size of 1 in a temporal dimension and a size of a natural number in a distance dimension, the distance dimension being a direction away from the marine radar. The temporal dimension feature extracting unit has one or more temporal dimension convolution layers, and each of the temporal dimension convolution layers has a convolutional filter having a size of a natural number in the temporal dimension and a size of a natural number in a distance dimension. The time-series prediction unit predicts a tsunami waveform at a prediction point using output of the temporal dimension feature extracting unit. The training data set is a set of simulated tsunami observation data and tsunami waveform data at a prediction point.

### ADVANTAGEOUS EFFECTS OF INVENTION

With the above-described configuration, the tsunami prediction device according to the technique of the present disclosure has an effect that prediction accuracy is higher than that of the conventional technique.

### BRIEF DESCRIPTION OF DRAWINGS

FIG. 1 is a block diagram illustrating functional blocks of a tsunami prediction device according to the technique of the present disclosure.
FIG. 2 is a flowchart illustrating processing steps of the tsunami prediction device according to the technique of the present disclosure.
FIG. 3 is a hardware configuration diagram of the tsunami prediction device according to the technique of the present disclosure.
FIG. 4 is a schematic diagram illustrating arrangement of observation points of observation data used as input to the tsunami prediction device according to the technique of the present disclosure.
FIG. 5 is a schematic diagram illustrating a structure of input data to a CNN unit according to the technique of the present disclosure.
FIG. 6 is a schematic diagram illustrating input and output of a distance dimension feature extracting unit of CNN according to the technique of the present disclosure.
FIG. 7 is a schematic diagram illustrating a temporal dimension feature extracting unit of the CNN according to the technique of the present disclosure.
FIG. 8 is a schematic diagram illustrating a processing process of the CNN according to the technique of the present disclosure.
FIG. 9 is a schematic diagram illustrating output of the tsunami prediction device according to the technique of the present disclosure.
FIG. 10 is a schematic diagram illustrating an example of creating training data according to the technique of the present disclosure.
FIG. 11 is a graph illustrating an effect of the learned tsunami prediction device according to the technique of the present disclosure.

### DESCRIPTION OF EMBODIMENTS

A tsunami prediction device 100 according to the technique of the present disclosure is a device that predicts inundation depth on land due to tsunami or a wave height of tsunami on sea.

The tsunami prediction device 100 according to the technique of the present disclosure is a device using artificial intelligence (AI), and can be considered with separating into a learning phase and an AI utilization phase. Only in a case where it is necessary to clarify the learning phase and the AI utilization phase, the present device in the learning phase is distinguished by referring to as a tsunami learning device. In addition, the tsunami prediction device 100 in the AI utilization phase only needs to include a CNN model learned by the technique of the present disclosure, and does not need to include a learning function itself.

### First Embodiment.

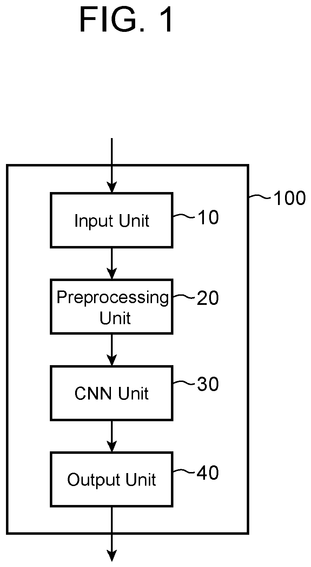

FIG. 1 is a block diagram illustrating functional blocks of a tsunami prediction device 100 according to a first embodiment. As illustrated in FIG. 1, the tsunami prediction device 100 includes an input unit 10, a preprocessing unit 20, a CNN unit 30, and an output unit 40.

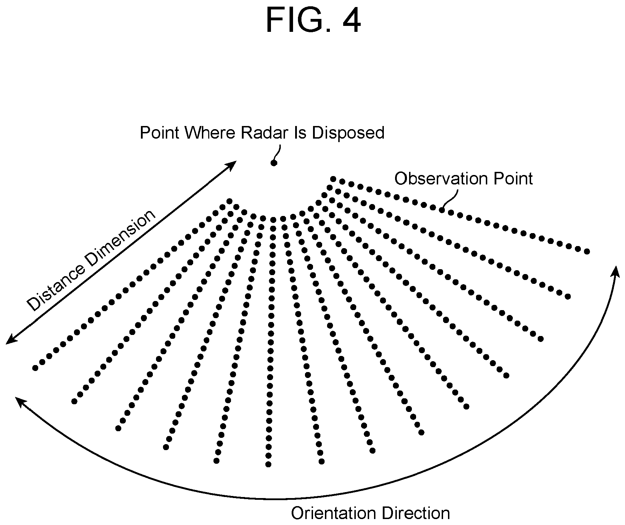

The tsunami prediction device 100 according to the first embodiment uses observation data from a marine radar as input information. Specifically, the observation data is assumed to be a flow rate, but may be a physical quantity such as a wave height or a water pressure. The input unit 10 of the tsunami prediction device 100 receives the observation data from the marine radar. Details of a region observed by the marine radar will be apparent from description of FIG. 4 described later.

In the tsunami prediction device 100 according to the technique of the present disclosure, input information used in the learning phase may be different from that used in the AI utilization phase. For example, the tsunami learning device in the learning phase may perform a tsunami simulation assuming a large number of scenarios by utilizing a supercomputer in advance, generate tsunami simulation data, and use simulated tsunami observation data as input information. Of course, if actual tsunami observation data is available as teacher data, the actual observation data may be used as the input information. That is, the "observation data from the marine radar" can include simulated observation data or actual observation data. In addition, in the AI utilization phase, the tsunami prediction device 100 may use actual observation data obtained in real time at the time of occurrence of an earthquake or the like as the input information.

The preprocessing unit 20 of the tsunami prediction device 100 performs preprocessing on the input observation data. More specifically, the preprocessing unit 20 performs processing of converting the observation data from the marine radar input to the input unit 10 into a format that can be handled by the CNN unit 30. Details of the preprocessing will be apparent from the following description.

The CNN unit 30 of the tsunami prediction device 100 includes CNN as a learning model. In other words, the CNN unit 30 performs CNN processing on the preprocessed observation data. The CNN includes a distance dimension feature extracting unit, a temporal dimension feature extracting unit, and a time-series prediction unit. The CNN learns a relationship between the simulated tsunami observation data and a tsunami waveform at a prediction point. A set of the simulated tsunami observation data and the tsunami waveform data at the prediction point used for learning is referred to as a training data set. Details of the CNN will be apparent from the following description.

The output unit 40 of the tsunami prediction device 100 outputs a prediction result obtained by the CNN processing. More specifically, the output unit 40 outputs a predicted waveform of tsunami at the prediction point. The prediction point is not limited to one point, and prediction at a plurality of points can be performed simultaneously.

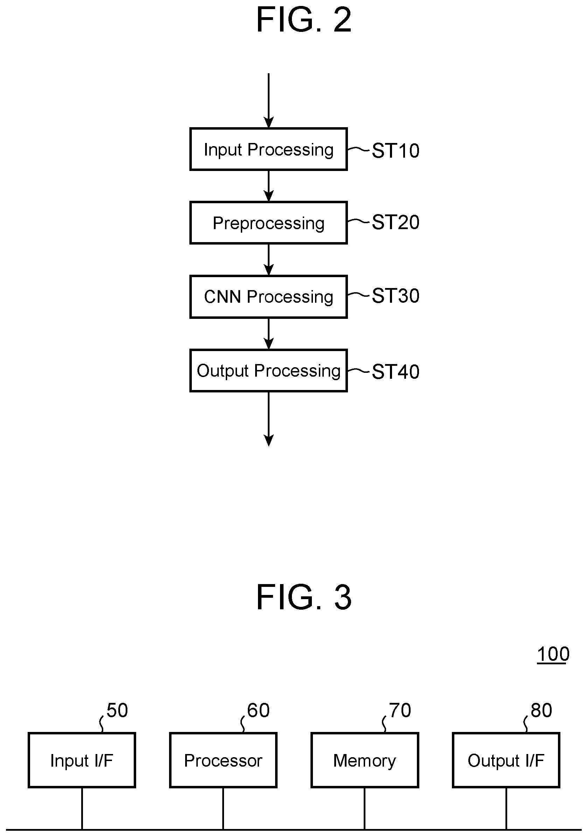

FIG. 2 is a flowchart illustrating processing steps of the tsunami prediction device 100 according to the first embodiment. As illustrated in FIG. 2, the processing steps of the tsunami prediction device 100 include input processing ST10 performed by the input unit 10, preprocessing ST20 performed by the preprocessing unit 20, CNN processing ST30 performed by the CNN unit 30, and output processing ST40 performed by the output unit 40.

FIG. 3 is a hardware configuration diagram of the tsunami prediction device 100 according to the first embodiment. As illustrated in FIG. 3, the tsunami prediction device 100 may include an input interface 50, a processor 60, a memory 70, and an output interface 80.

Functions of the input unit 10, the preprocessing unit 20, the CNN unit 30, and the output unit 40 in the tsunami prediction device 100 are implemented by a processing circuit. That is, the tsunami prediction device 100 includes a processing circuit for performing tsunami prediction by inputting, preprocessing, CNN processing, and outputting observation data. The processing circuit may be dedicated hardware or the processor 60 that executes a program stored in the memory 70. The processor 60 is also referred to as a CPU, a central processing device, a processing device, an arithmetic device, a microprocessor, a microcomputer, or a DSP.

When the processing circuit is dedicated hardware, for example, a single circuit, a composite circuit, a programmed processor, a parallel programmed processor, an ASIC, an FPGA, or a combination thereof corresponds to the processing circuit. In the tsunami prediction device 100, each of functions of the input unit 10, the preprocessing unit 20, the CNN unit 30, and the output unit 40 may be implemented by the processing circuit, or the functions of the units may be collectively implemented by the processing circuit.

In a case where the processing circuit is a CPU, the functions of the input unit 10, the preprocessing unit 20, the CNN unit 30, and the output unit 40 are implemented by software, firmware, or a combination of software and firmware. The software and the firmware are each described as a program and stored in the memory 70. By reading and executing the program stored in the memory 70, the processing circuit implements the functions of the units. That is, the tsunami prediction device 100 includes the memory 70 for storing programs that cause the input processing ST10 performed by the input unit 10, the preprocessing ST20 performed by the preprocessing unit 20, the CNN processing ST30 performed by the CNN unit 30, and the output processing ST40 performed by the output unit 40 to be executed as a result when the programs are executed by the processing circuit. It can also be said that these programs cause a computer to execute procedures and methods performed by the input unit 10, the preprocessing unit 20, the CNN unit 30, and the output unit 40. Here, the memory 70 may be a nonvolatile or volatile semiconductor memory such as a RAM, a ROM, a flash memory, an EPROM, or an EEPROM. In addition, the memory 70 may be a magnetic disk, a flexible disk, an optical disk, a compact disk, a mini disk, or a DVD. Furthermore, the memory 70 may be an HDD or an SSD.

Note that, in the tsunami prediction device 100, some of the functions of the input unit 10, the preprocessing unit 20, the CNN unit 30, and the output unit 40 may be configured by dedicated hardware, and some of the functions may be configured by software or firmware.

In this way, the processing circuitry can implement the functions of the tsunami prediction device 100 by hardware, software, firmware, or a combination thereof.

FIG. 4 is a schematic diagram illustrating arrangement of observation points of observation data used as input to the tsunami prediction device 100 according to the first embodiment. The observation data is actually or simulatively acquired by a marine radar. The observation points are set at equal intervals in a direction away from a transmission antenna on a plurality of lines of sight spreading in a fan shape around a transmission and reception antenna of the marine radar. The observation data used by the tsunami prediction device 100 has a dimension and a spread as a plane when an observation region of the marine radar is viewed from the sky. As illustrated in FIG. 4, the direction away from the transmission antenna is referred to as a "distance dimension", and a rotation direction around the marine radar is referred to as an "orientation direction".

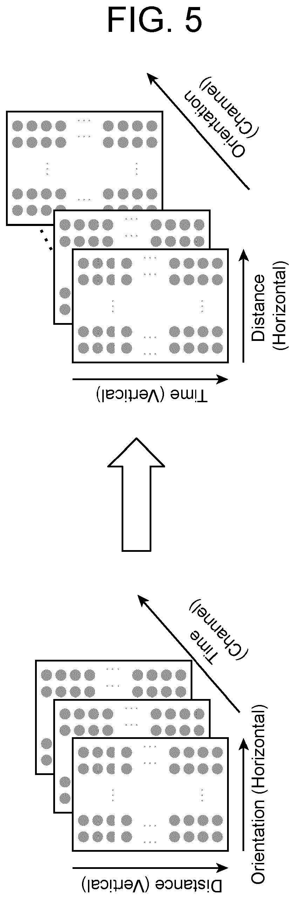

FIG. 5 is a schematic diagram illustrating a structure of an input layer of CNN in the CNN unit 30 according to the first embodiment. A left side of an arrow (a source of the arrow) in FIG. 5 illustrates the structure of the input layer of the CNN in which a time-series direction is a channel direction (conventional technique). A right side of the arrow (a tip of the arrow) in FIG. 5 illustrates the structure of the input layer of the CNN in the CNN unit 30 according to the first embodiment. As illustrated in FIG. 5, observation data is input to the CNN of the CNN unit 30 according to the first embodiment in such a manner that the channel direction is the orientation direction of the observation data in the input layer.

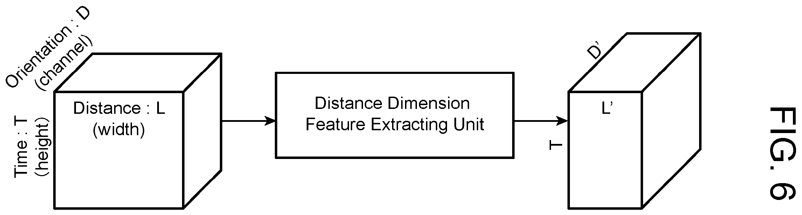

FIG. 6 illustrates input and output of the distance dimension feature extracting unit of the CNN in the CNN unit 30 according to the first embodiment.

In general, a convolution layer in CNN performs an operation called two-dimensional convolution. Typical examples of the convolution operation in image processing include a blurring operation using a Gaussian filter and contour extraction using a Laplacian filter. In other words, a two-dimensional convolution filter such as n × n is often used in the convolution layer in the CNN.

The distance dimension feature extracting unit of the CNN in the CNN unit 30 according to the first embodiment has one or more distance dimension convolution layers. The distance dimension convolution layer has a convolution filter having a size of 1 in a temporal dimension and a size of a natural number in a distance dimension. By adopting such a size of the convolution filter, a convolution operation is performed only on a flow rate distribution in the distance dimension, and as a result, a feature in the distance dimension of the flow rate distribution is extracted independently of a feature in the temporal dimension of the flow rate distribution.

Note that a plurality of the distance dimension convolution layers of the distance dimension feature extracting unit can be connected.

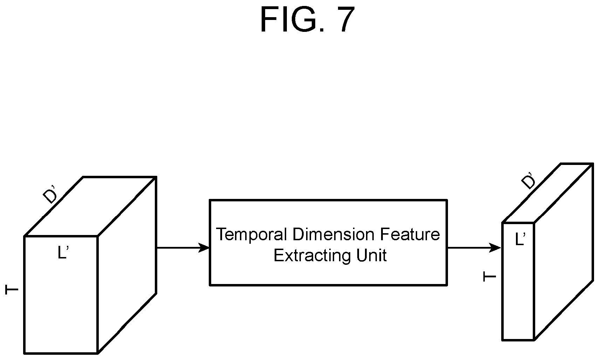

FIG. 7 is a schematic diagram illustrating the temporal dimension feature extracting unit of the CNN in the CNN unit 30 according to the first embodiment. More specifically, FIG. 7 illustrates input and output of the temporal dimension feature extracting unit of the CNN in the CNN unit 30 according to the first embodiment.

The temporal dimension feature extracting unit of the CNN in the CNN unit 30 according to the first embodiment has one or more temporal dimension convolution layers. The temporal dimension convolution layer has a convolution filter having a size of a natural number in a temporal dimension and a size of a natural number in a distance dimension. By adopting such a size of the convolution filter, a convolution operation is performed on a feature in the temporal dimension, and as a result, a feature of a flow rate distribution in the temporal dimension is extracted. Note that a plurality of the convolution layers of the temporal dimension feature extracting unit can be connected. In addition, the feature extraction in the temporal dimension may be implemented not only by the convolution operation but also by RNN, a transformer, or the like.

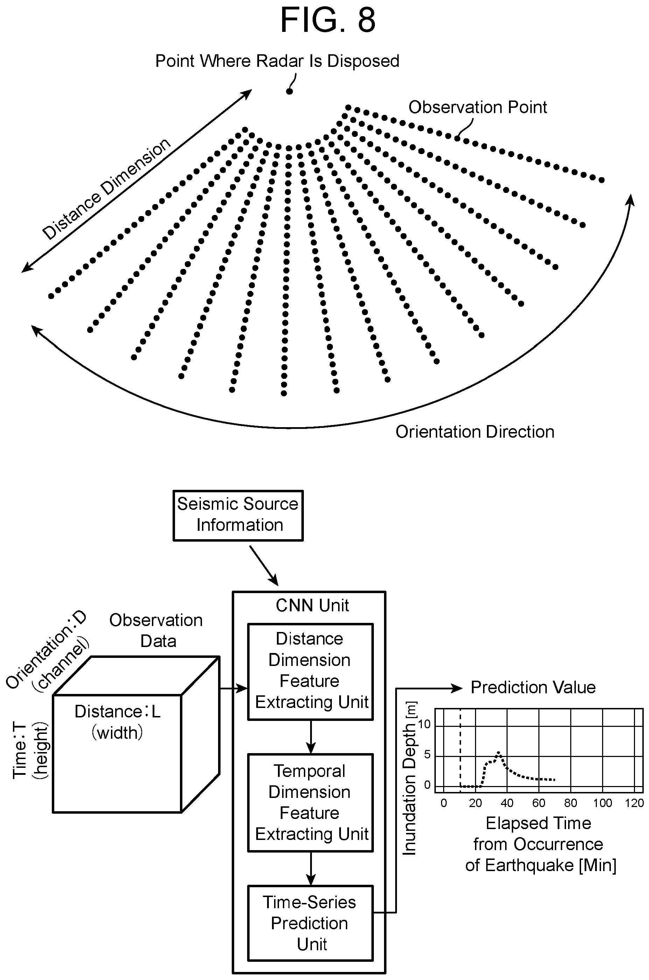

FIG. 8 is a schematic diagram illustrating a processing process of the CNN in the CNN unit 30 according to the first embodiment, that is, the CNN processing ST30. As illustrated in FIG. 8, output of the time-series prediction unit of the CNN in the CNN unit 30 is a tsunami waveform including a current time at a prediction point.

Note that, as illustrated in FIG. 8, auxiliary information such as earthquake seismic source information may be used in the CNN processing process in the CNN unit 30. As a specific way of giving the earthquake seismic source information, the seismic source information may be added to a training data set which is teacher data, or may be added to an intermediate product of the CNN as illustrated in FIG. 8.

Specific examples of the auxiliary information include, in addition to the seismic source information, a water pressure acquired by a submarine cable and a tide level change in a GPS wave meter. Addition of the auxiliary information makes it possible to further characterize a pattern of tsunami to be learned, which is expected to improve prediction accuracy of tsunami.

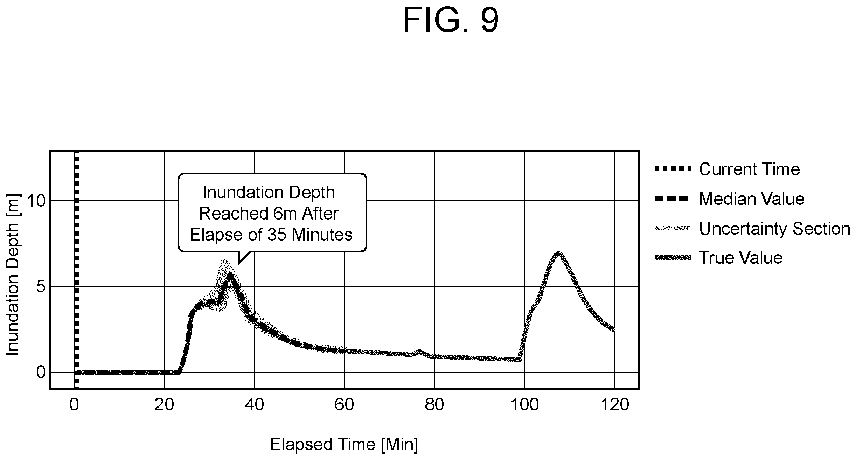

FIG. 9 is a schematic diagram in a case where output of the tsunami prediction device 100 according to the first embodiment is set to an inundation depth on land. In the graph illustrated in FIG. 9, the vertical axis represents an inundation depth [m], and the horizontal axis represents an elapsed time [min].

When FIG. 9 is viewed as a graph in the learning phase, a true value in the graph represents a plot of teacher data used for learning. The teacher data is generated by simulation using a supercomputer in many cases, but may be an actual measured value when the actual measured value is available. As illustrated in FIG. 9, the tsunami prediction device 100 can predict "a wave height or an inundation depth of y [m] after an elapse of x minutes" from a result of time-series regression. In addition, as illustrated in FIG. 9, the output of the tsunami prediction device 100 may perform prediction in consideration of a probability distribution. That is, the tsunami prediction device 100 according to the technique of the present disclosure may output a prediction result of "a wave height or an inundation depth of y ± Δy [m] after an elapse of x minutes".

In addition, when FIG. 9 is viewed as a graph in the AI utilization phase, a true value in the graph represents a plot of an actual measured value.

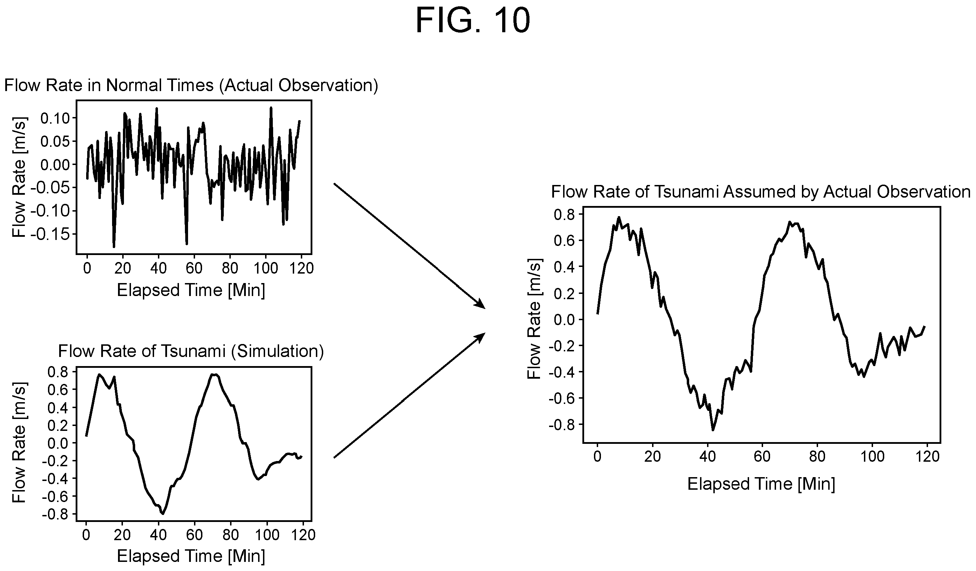

FIG. 10 is a schematic diagram illustrating the learning phase of the tsunami prediction device 100 according to the first embodiment, that is, an example of creating a training data set in the tsunami learning device. FIG. 10 illustrates a contrivance of bringing a simulation waveform close to an actual waveform by adding time-series observation data in normal times to time-series data of simulation representing a wave height at a certain observation point. This is because, in general, waveform data that can be generated by simulation is flow rate component data of tsunami itself, and it is difficult to model a component such as fluctuation or noise derived from a matter other than the tsunami.

In the tsunami prediction device 100 according to the first embodiment, learning using a training data set created in this manner may be performed.

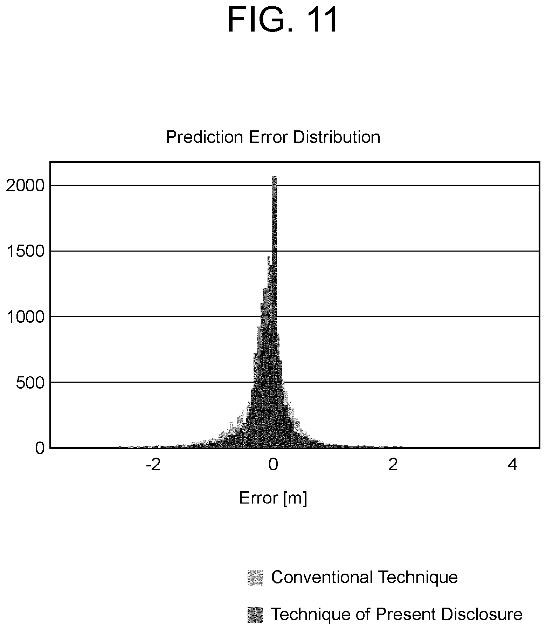

FIG. 11 is a graph illustrating a prediction error distribution of the learned tsunami prediction device 100 according to the first embodiment in comparison with that of the conventional technique.

The number of pieces of simulation data of tsunami used in an experiment of the prediction performance comparison illustrated in FIG. 11 was 1519, 1209 pieces of which were used as a training data set, and the remaining 310 pieces were used as a verification data set for performance comparison. In the performance comparison, comparison of an error distribution for a maximum inundation depth was performed. For the sake of fairness, a CPU and a GPU used for the prediction device for comparison were the same as those of the tsunami prediction device 100 according to the technique of the present disclosure. A convolution filter of CNN according to the prediction device for comparison had a size of 3 × 3, and data at past ten time points was used as input. In the CNN according to the technique of the present disclosure, a convolution filter of the distance dimension feature extracting unit had a size of 1 × 3, a convolution filter of the temporal dimension feature extracting unit had a size of 2 × 1, and data at past eight time points was used as input.

As a result of the prediction performance comparison experiment, an average absolute error of the prediction device for comparison was 0.33, whereas an average absolute error of the tsunami prediction device 100 according to the technique of the present disclosure was 0.25.

Since the tsunami prediction device 100 according to the first embodiment has the above configuration, a feature is extracted while a time axis and a spatial axis are independent of each other in the convolution layer in the CNN. By this function, the tsunami prediction device 100 according to the technique of the present disclosure has a smaller predicted average absolute error and higher prediction accuracy than that of the conventional technique.

### INDUSTRIAL APPLICABILITY

The tsunami prediction device 100 according to the technique of the present disclosure can be used in actual tsunami disaster prevention, and has industrial applicability.

### REFERENCE SIGNS LIST

- 10: input unit
- 20: preprocessing unit
- 30: CNN unit
- 40: output unit
- 50: input interface
- 60: processor
- 70: memory
- 80: output interface
- 100: tsunami prediction device

## Claims

1. A tsunami learning device comprising:
an input unit (10) to acquire a training data set including observation data of a marine radar; and
a convolutional neural network, CNN, unit (30) including a CNN, to perform CNN processing on the training data by using the training data set as teacher data to learn the CNN, wherein
the observation data is input to the CNN in such a manner that a channel direction of an input layer is an orientation direction of the observation data, the orientation direction being a rotational direction around the marine radar,
the CNN includes a distance dimension feature extracting unit, a temporal dimension feature extracting unit, and a time-series prediction unit,
the distance dimension feature extracting unit has one or more distance dimension convolution layers,
each of the distance dimension convolution layers has a filter having a size of 1 in a temporal dimension and a size of a natural number in a distance dimension, the distance dimension being a direction away from the marine radar,
the temporal dimension feature extracting unit has one or more temporal dimension convolution layers,
each of the temporal dimension convolution layers has a convolutional filter having a size of a natural number in the temporal dimension and a size of a natural number in a distance dimension,
the time-series prediction unit is configured to predict a tsunami waveform at a prediction point using output of the temporal dimension feature extracting unit, and
the training data set is a set of simulated tsunami observation data and tsunami waveform data at the prediction point.

2. A computer-implemented tsunami learning method comprising:
acquiring, by an input unit (10), a training data set including observation data of a marine radar; and
performing, by a convolutional neural network, CNN, unit (30) including a CNN, CNN processing on the training data by using the training data set as teacher data to learn the CNN, wherein
the observation data is input to the CNN in such a manner that a channel direction of an input layer is an orientation direction of the observation data, the orientation direction being a rotational direction around the marine radar,
the CNN includes a distance dimension feature extracting unit, a temporal dimension feature extracting unit, and a time-series prediction unit,
the distance dimension feature extracting unit uses one or more distance dimension convolution layers,
each of the distance dimension convolution layers uses a filter having a size of 1 in a temporal dimension and a size of a natural number in a distance dimension, the distance dimension being a direction away from the marine radar,
the temporal dimension feature extracting unit uses one or more temporal dimension convolution layers,
each of the temporal dimension convolution layers uses a convolutional filter having a size of a natural number in the temporal dimension and a size of a natural number in a distance dimension,
the time-series prediction unit predicts a tsunami waveform at a prediction point using output of the temporal dimension feature extracting unit, and
the training data set is a set of simulated tsunami observation data and tsunami waveform data at the prediction point.

3. The tsunami learning device according to claim 1, wherein
the training data set further includes seismic source information.

4. The tsunami learning method according to claim 2, wherein
the training data set further includes seismic source information.

5. A tsunami prediction device (100) comprising a learned convolutional neural network, **CNN,** that has been learned according to the tsunami learning device of claim 1 or claim 3, to predict a tsunami waveform including a current time at a prediction point, wherein
a channel direction of an input layer of the CNN is an orientation direction of observation data of a marine radar, the orientation direction being a rotational direction around the marine radar,
the CNN includes a distance dimension feature extracting unit, a temporal dimension feature extracting unit, and a time-series prediction unit,
the distance dimension feature extracting unit has one or more distance dimension convolution layers,
each of the distance dimension convolution layers has a filter having a size of 1 in a temporal dimension and a size of a natural number in a distance dimension, the distance dimension being a direction away from the marine radar,
the temporal dimension feature extracting unit has one or more temporal dimension convolution layers,
each of the temporal dimension convolution layers has a convolutional filter having a size of a natural number in the temporal dimension and a size of a natural number in a distance dimension, and
the time-series prediction unit is configured to predict the tsunami waveform at the prediction point using output of the temporal dimension feature extracting unit.

6. A computer-implemented tsunami prediction method for predicting a tsunami waveform including a current time at a prediction point using a learned convolutional neural network, CNN, that has been learned according to the tsunami learning method of claim 2 or claim 4, wherein
a channel direction of an input layer of the CNN is an orientation direction of observation data of a marine radar, the orientation direction being a rotational direction around the marine radar,
the CNN includes a distance dimension feature extracting unit, a temporal dimension feature extracting unit, and a time-series prediction unit,
the distance dimension feature extracting unit uses one or more distance dimension convolution layers,
each of the distance dimension convolution layers uses a filter having a size of 1 in a temporal dimension and a size of a natural number in a distance dimension, the distance dimension being a direction away from the marine radar,
the temporal dimension feature extracting unit uses one or more temporal dimension convolution layers,
each of the temporal dimension convolution layers uses a convolutional filter having a size of a natural number in the temporal dimension and a size of a natural number in a distance dimension, and
the time-series prediction unit predicts the tsunami waveform at the prediction point using output of the temporal dimension feature extracting unit.

## Patentansprüche

1. Tsunami-Lerneinrichtung, umfassend:
eine Eingabeeinheit (10) zum Beschaffen eines Trainingsdatensatzes, der Beobachtungsdaten eines Seeradars umfasst; und
eine Convolutional-Neural-Network, CNN,-Einheit (30), die ein CNN umfasst, um eine CNN-Verarbeitung des Trainings durchzuführen, indem der Trainingsdatensatz als Lehrdaten verwendet wird, zum Lernen des CNNs, wobei
die Beobachtungsdaten in das CNN so eingegeben werden, dass eine Kanalrichtung einer Eingabeschicht eine Orientierungsrichtung der Beobachtungsdaten ist, wobei die Orientierungsrichtung eine Drehrichtung um das Seeradar ist,
das CNN eine Entfernungsdimension-Merkmalextrahiereinheit, eine Zeitliche-Dimension-Merkmalextrahiereinheit und eine Zeitreihe-Vorhersageeinheit aufweist,
die Entfernungsdimension-Merkmalextrahiereinheit eine oder mehrere Entfernungsdimension-Faltungsschichten aufweist,
jede der Entfernungsdimension-Faltungsschichten ein Filter aufweist, das eine Größe von 1 in einer zeitlichen Dimension und eine Größe einer natürlichen Zahl in einer Entfernungsdimension aufweist, wobei die Entfernungsdimension eine Richtung weg von dem Seeradar ist,
die Zeitliche-Dimension-Merkmalextrahiereinheit eine oder mehrere Zeitliche-Dimension-Faltungsschichten aufweist,
jede der Zeitliche-Dimension-Faltungsschichten ein Faltungsfilter aufweist, das eine Größe einer natürlichen Zahl in der zeitlichen Dimension und eine Größe einer natürlichen Zahl in einer Entfernungsdimension aufweist,
die Zeitreihe-Vorhersageeinheit eingerichtet ist, eine Tsunami-Wellenform an einem Vorhersagepunkt unter Verwendung einer Ausgabe der Zeitliche-Dimension-Merkmalextrahiereinheit vorherzusagen, und
der Trainingsdatensatz ein Satz von simulierten Tsunami-Beobachtungsdaten und Tsunami-Wellenformdaten am Vorhersagepunkt ist.

2. Computer-implementiertes Tsunami-Lernverfahren, umfassend:
Beschaffen, durch eine Eingabeeinheit (10), eines Trainingsdatensatzes, der Beobachtungsdaten eines Seeradars umfasst; und
Durchführen, durch eine Convolutional-Neural-Network, CNN,-Einheit (30), die ein CNN umfasst, einer CNN-Verarbeitung an den Trainingsdaten, indem der Trainingsdatensatz als Lehrdaten verwendet wird, zum Lernen des CNNs, wobei
die Beobachtungsdaten in das CNN so eingegeben werden, dass eine Kanalrichtung einer Eingabeschicht eine Orientierungsrichtung der Beobachtungsdaten ist, wobei die Orientierungsrichtung eine Drehrichtung um das Seeradar ist,
das CNN eine Entfernungsdimension-Merkmalextrahiereinheit, eine Zeitliche-Dimension-Merkmalextrahiereinheit und eine Zeitreihe-Vorhersageeinheit aufweist,
die Entfernungsdimension-Merkmalextrahiereinheit eine oder mehrere Entfernungsdimension-Faltungsschichten verwendet,
jede der Entfernungsdimension-Faltungsschichten ein Filter verwendet, das eine Größe von 1 in einer zeitlichen Dimension und eine Größe einer natürlichen Zahl in einer Entfernungsdimension aufweist, wobei die Entfernungsdimension eine Richtung weg von dem Seeradar ist,
die Zeitliche-Dimension-Merkmalextrahiereinheit eine oder mehrere Zeitliche-Dimension-Faltungsschichten verwendet,
jede der Zeitliche-Dimension-Faltungsschichten ein Faltungsfilter verwendet, das eine Größe einer natürlichen Zahl in der zeitlichen Dimension und eine Größe einer natürlichen Zahl in einer Entfernungsdimension aufweist,
die Zeitreihe-Vorhersageeinheit eine Tsunami-Wellenform an einem Vorhersagepunkt unter Verwendung einer Ausgabe der Zeitliche-Dimension-Merkmalextrahiereinheit vorhersagt, und
der Trainingsdatensatz ein Satz von simulierten Tsunami-Beobachtungsdaten und Tsunami-Wellenformdaten am Vorhersagepunkt ist.

3. Tsunami-Lerneinrichtung nach Anspruch 1, wobei
der Trainingsdatensatz ferner seismische Quelleninformationen aufweist.

4. Tsunami-Lernverfahren nach Anspruch 2, wobei
der Trainingsdatensatz ferner seismische Quelleninformationen aufweist.

5. Tsunami-Vorhersageeinrichtung (100), umfassend ein erlerntes Convolutional Neural Network, CNN, das gemäß der Tsunami-Lerneinrichtung nach Anspruch 1 oder Anspruch 3 erlernt wurde, um eine Tsunami-Wellenform einschließlich einer aktuellen Zeit an einem Vorhersagepunkt vorherzusagen, wobei
eine Kanalrichtung einer Eingabeschicht des CNN eine Orientierungsrichtung von Beobachtungsdaten eines Seeradars ist, wobei die Orientierungsrichtung eine Drehrichtung um das Seeradar ist,
das CNN eine Entfernungsdimension-Merkmalextrahiereinheit, eine Zeitliche-Dimension-Merkmalextrahiereinheit und eine Zeitreihe-Vorhersageeinheit aufweist,
die Entfernungsdimension-Merkmalextrahiereinheit eine oder mehrere Entfernungsdimension-Faltungsschichten aufweist,
jede der Entfernungsdimension-Faltungsschichten ein Filter aufweist, das eine Größe von 1 in einer zeitlichen Dimension und eine Größe einer natürlichen Zahl in einer Entfernungsdimension aufweist, wobei die Entfernungsdimension eine Richtung weg von dem Seeradar ist,
die Zeitliche-Dimension-Merkmalextrahiereinheit eine oder mehrere Zeitliche-Dimension-Faltungsschichten aufweist,
jede der Zeitliche-Dimension-Faltungsschichten ein Faltungsfilter aufweist, das eine Größe einer natürlichen Zahl in der zeitlichen Dimension und eine Größe einer natürlichen Zahl in einer Entfernungsdimension aufweist, und
die Zeitreihe-Vorhersageeinheit eingerichtet ist, die Tsunami-Wellenform an dem Vorhersagepunkt unter Verwendung einer Ausgabe der Zeitliche-Dimension-Merkmalextrahiereinheit vorherzusagen.

6. Computer-implementiertes Tsunami-Vorhersageverfahren zum Vorhersagen einer Tsunami-Wellenform, aufweisend eine aktuelle Zeit am Vorhersagepunkt, verwendend ein erlerntes Convolutional Neural Network, CNN, das gemäß dem Tsunami-Lernverfahren nach Anspruch 2 oder Anspruch 4 erlernt wurde, wobei
eine Kanalrichtung einer Eingabeschicht des CNN eine Orientierungsrichtung von Beobachtungsdaten eines Seeradars ist, wobei die Orientierungsrichtung eine Drehrichtung um das Seeradar ist,
das CNN eine Entfernungsdimension-Merkmalextrahiereinheit, eine Zeitliche-Dimension-Merkmalextrahiereinheit und eine Zeitreihe-Vorhersageeinheit aufweist,
die Entfernungsdimension-Merkmalextrahiereinheit eine oder mehrere Entfernungsdimension-Faltungsschichten verwendet,
jede der Entfernungsdimension-Faltungsschichten ein Filter verwendet, das eine Größe von 1 in einer zeitlichen Dimension und eine Größe einer natürlichen Zahl in einer Entfernungsdimension aufweist, wobei die Entfernungsdimension eine Richtung weg von dem Seeradar ist,
die Zeitliche-Dimension-Merkmalextrahiereinheit eine oder mehrere Zeitliche-Dimension-Faltungsschichten verwendet,
jede der Zeitliche-Dimension-Faltungsschichten ein Faltungsfilter verwendet, das eine Größe einer natürlichen Zahl in der zeitlichen Dimension und eine Größe einer natürlichen Zahl in einer Entfernungsdimension aufweist, und
die Zeitreihe-Vorhersageeinheit die Tsunami-Wellenform an dem Vorhersagepunkt unter Verwendung einer Ausgabe der Zeitliche-Dimension-Merkmalextrahiereinheit vorhersagt.

## Revendications

1. Dispositif d'apprentissage de tsunami, comprenant :
une unité d'entrée (10) pour acquérir un ensemble de données d'entraînement incluant des données d'observation d'un radar marin ; et
une unité (30) de réseau neuronal convolutif, CNN, incluant un CNN, pour effectuer un traitement de CNN sur les données d'entraînement en utilisant l'ensemble de données d'entraînement en tant que données d'enseignant pour un apprentissage du CNN, dans lequel
les données d'observation sont entrées dans le CNN de telle manière qu'une direction de canal d'une couche d'entrée est une direction d'orientation des données d'observation, la direction d'orientation étant une direction de rotation autour du radar marin,
le CNN inclut une unité d'extraction de caractéristique de dimension de distance, une unité d'extraction de caractéristique de dimension temporelle et une unité de prédiction de série temporelle,
l'unité d'extraction de caractéristique de dimension de distance présente une ou plusieurs couches de convolution de dimension de distance,
chacune des couches de convolution de dimension de distance présente un filtre présentant une taille de 1 dans une dimension temporelle et d'une taille d'un nombre naturel dans une dimension de distance, la dimension de distance étant une direction s'éloignant du radar marin,
l'unité d'extraction de caractéristique de dimension temporelle présente une ou plusieurs couches de convolution de dimension temporelle,
chacune des couches de convolution de dimension temporelle présente un filtre convolutif présentant une taille d'un nombre naturel dans la dimension temporelle et une taille d'un nombre naturel dans une dimension de distance,
l'unité de prédiction de série temporelle est configurée pour prédire une forme d'onde de tsunami au niveau d'un point de prédiction en utilisant la sortie de l'unité d'extraction de caractéristique de dimension temporelle, et
l'ensemble de données d'entraînement est un ensemble de données d'observation de tsunami simulées et de données de forme d'onde de tsunami au niveau du point de prédiction.

2. Procédé d'apprentissage de tsunami mis en œuvre par ordinateur, comprenant les étapes consistant à :
acquérir, par l'intermédiaire d'une unité d'entrée (10), un ensemble de données d'entraînement incluant des données d'observation d'un radar marin ; et
effectuer, par l'intermédiaire d'une unité (30) de réseau neuronal convolutif, CNN, incluant un CNN, un traitement de CNN sur les données d'entraînement en utilisant l'ensemble de données d'entraînement en tant que données d'enseignant pour un apprentissage du CNN, dans lequel
les données d'observation sont entrées dans le CNN de telle manière qu'une direction de canal d'une couche d'entrée est une direction d'orientation des données d'observation, la direction d'orientation étant une direction de rotation autour du radar marin,
le CNN inclut une unité d'extraction de caractéristique de dimension de distance, une unité d'extraction de caractéristique de dimension temporelle et une unité de prédiction de série temporelle,
l'unité d'extraction de caractéristique de dimension de distance utilise une ou plusieurs couches de convolution de dimension de distance,
chacune des couches de convolution de dimension de distance utilise un filtre présentant une taille de 1 dans une dimension temporelle et d'une taille d'un nombre naturel dans une dimension de distance, la dimension de distance étant une direction s'éloignant du radar marin,
l'unité d'extraction de caractéristique de dimension temporelle utilise une ou plusieurs couches de convolution de dimension temporelle,
chacune des couches de convolution de dimension temporelle utilise un filtre convolutif présentant une taille d'un nombre naturel dans la dimension temporelle et une taille d'un nombre naturel dans une dimension de distance,
l'unité de prédiction de série temporelle prédit une forme d'onde de tsunami au niveau d'un point de prédiction en utilisant la sortie de l'unité d'extraction de caractéristique de dimension temporelle, et
l'ensemble de données d'entraînement est un ensemble de données d'observation de tsunami simulées et de données de forme d'onde de tsunami au niveau du point de prédiction.

3. Dispositif d'apprentissage de tsunami selon la revendication 1, dans lequel
l'ensemble de données d'entraînement inclut en outre des informations de source sismique.

4. Procédé d'apprentissage de tsunami selon la revendication 2, dans lequel
l'ensemble de données d'entraînement inclut en outre des informations de source sismique.

5. Dispositif de prédiction de tsunami (100) comprenant un réseau neuronal convolutif, CNN, ayant suivi un apprentissage, qui a suivi un apprentissage selon le dispositif d'apprentissage de tsunami de la revendication 1 ou de la revendication 3, pour prédire une forme d'onde de tsunami comprenant un temps actuel au niveau d'un point de prédiction, dans lequel
une direction de canal d'une couche d'entrée du CNN est une direction d'orientation de données d'observation d'un radar marin, la direction d'orientation étant une direction de rotation autour du radar marin,
le CNN inclut une unité d'extraction de caractéristique de dimension de distance, une unité d'extraction de caractéristique de dimension temporelle et une unité de prédiction de série temporelle,
l'unité d'extraction de caractéristique de dimension de distance présente une ou plusieurs couches de convolution de dimension de distance,
chacune des couches de convolution de dimension de distance présente un filtre présentant une taille de 1 dans une dimension temporelle et d'une taille d'un nombre naturel dans une dimension de distance, la dimension de distance étant une direction s'éloignant du radar marin,
l'unité d'extraction de caractéristique de dimension temporelle présente une ou plusieurs couches de convolution de dimension temporelle,
chacune des couches de convolution de dimension temporelle présente un filtre convolutif présentant une taille d'un nombre naturel dans la dimension temporelle et une taille d'un nombre naturel dans une dimension de distance, et
l'unité de prédiction de série temporelle est configurée pour prédire la forme d'onde de tsunami au niveau du point de prédiction en utilisant la sortie de l'unité d'extraction de caractéristique de dimension temporelle.

6. Procédé de prédiction de tsunami mis en œuvre par ordinateur pour prédire une forme d'onde de tsunami comprenant un temps actuel au niveau d'un point de prédiction en utilisant un réseau neuronal convolutif, CNN, ayant suivi un apprentissage, qui a suivi un apprentissage selon le procédé d'apprentissage de tsunami de la revendication 2 ou de la revendication 4, dans lequel
une direction de canal d'une couche d'entrée du CNN est une direction d'orientation de données d'observation d'un radar marin, la direction d'orientation étant une direction de rotation autour du radar marin,
le CNN inclut une unité d'extraction de caractéristique de dimension de distance, une unité d'extraction de caractéristique de dimension temporelle et une unité de prédiction de série temporelle,
l'unité d'extraction de caractéristique de dimension de distance utilise une ou plusieurs couches de convolution de dimension de distance,
chacune des couches de convolution de dimension de distance utilise un filtre présentant une taille de 1 dans une dimension temporelle et d'une taille d'un nombre naturel dans une dimension de distance, la dimension de distance étant une direction s'éloignant du radar marin,
l'unité d'extraction de caractéristique de dimension temporelle utilise une ou plusieurs couches de convolution de dimension temporelle,
chacune des couches de convolution de dimension temporelle utilise un filtre convolutif présentant une taille d'un nombre naturel dans la dimension temporelle et une taille d'un nombre naturel dans une dimension de distance, et
l'unité de prédiction de série temporelle prédit la forme d'onde de tsunami au niveau du point de prédiction en utilisant la sortie de l'unité d'extraction de caractéristique de dimension temporelle.
